# EUROPEAN PATENT APPLICATION

(11) **EP 3 300 992 A1**
(43) Date of publication of application: **04.04.2018**
(21) Application number: 17197647.5
(22) Date of filing: 20.10.2017
(51) Int. Cl.: B62D 15/02, G06K 9/00

(54) **A SYSTEM AND METHOD FOR AUTONOMOUS PERPENDICULAR PARKING OF A VEHICLE**

(30) Priority: 28.09.2016 US 201615278589
(71) Applicant: Dura Operating, LLC, Auburn Hills, MI 48326 (US)
(72) Inventor: HOFFMAN, Robert John, Royal Oak, MI 48067 (US)
(74) Representative: Bungartz Christophersen Partnerschaft mbB Patentanwälte

(57) **Abstract**

A system and method of autonomous perpendicular parking of a vehicle. The method includes positioning the vehicle proximal to a perpendicular type parking space, detecting the outer distal end of each of the parallel line markings that delineates the parking space, navigating the vehicle into the parking space between the outer distal ends, determining an entry angle γ as the vehicle is driven into the parking space, and adjusting the steering angle Φ such that the entry angle γ approaches zero degrees as the vehicle is driven into the parking space. The method further comparing a reference distance on the vehicle with a measured distance on one of line markings and/or projecting a vector having a predetermined angle and length onto one of the line markings to verify the vehicle is properly within the parking space.

## Description

### TECHNICAL FIELD

The invention relates to a system and method for the autonomous parking of a vehicle; more specifically, to a system and method for autonomous perpendicular parking of a vehicle.

### BACKGROUND

The statements in this section merely provide background information related to the present disclosure and may or may not constitute prior art.

Autonomous vehicles are vehicles that have a high degree of automation that can transport passengers or items from one location to another. A typical autonomous vehicle uses a variety of sensors such as cameras, sonic sensors, radar, LiDAR, GPS receivers, and vehicle status sensors. An onboard controller determines an appropriate path based on a desired destination input by a user of the vehicle and uses the information gathered by the sensors to instruct the drive control system to navigate the vehicle to the desired destination.

SAE International Standard J3016, "Taxonomy and Definitions for Terms Related to On-Road Motor Vehicle Automated Driving Systems", issued January 2014, provides six (6) levels of automation, from SAE Level 0, No Automation, to SAE Level 5, Full Automation. For certain higher SAE levels of autonomous vehicles, the operator of the vehicle could request the initiation of a parking routine for the vehicle to autonomously park itself in an open air parking lot. The onboard controller would communicate with the GPS receiver to obtain the current location of the vehicle to calculate a proper path into a parking space having a preassigned GPS coordinate within the parking lot. The controller would then continue to receive the GPS signals, obtain environmental information from the vehicle sensors, and communicate with a vehicle drive control system to navigate the vehicle into the parking space following the calculated parking path without further assistance from the operator of the vehicle.

While the GPS navigation system is capable of providing the general location of the vehicle on a given road, the GPS navigation system does not provide sufficient fidelity to locate the vehicle within the confines of a single vehicle parking space that has not been previously assigned a GPS coordinate. Typical commercial GPS navigation systems are accurate to within 15 meters on the average, and more modern GPS navigation systems with Wide Area Augmentation System (WAAS) are accurate to approximately three (3) meters. With only a 3-meter accuracy, there is a likely potential for the parking vehicle to park outside the parking space delineated by parking line markings. Furthermore, parking lots located in concrete structures may have limited access to GPS signals, thereby rendering the GPS receiver useless for guiding a vehicle into a parking space.

There remains a need for a system and method to detect an available parking space, in an area with limited or no GPS signal, calculate a proper path into the parking space, navigate the vehicle into the parking space, and verify that the vehicle is properly positioned within the parking space.

### SUMMARY

A method of autonomous perpendicular parking of a vehicle is provided. The method includes the steps of positioning the vehicle proximal to a parking space delineated by a pair of parallel line markings; detecting the pair of parallel line markings and the outer distal end of each of the parallel line markings; driving the vehicle into the parking space between the outer distal end of each of the parallel line markings; determining an entry angle γ as the vehicle is driven into the parking space; and applying a steering angle Φ, by a controller, such that the entry angle γ approaches zero degrees as the vehicle is driven into the parking space. The entry angle γ is defined as the difference in direction between a longitudinal axis of the vehicle extending in a direction toward the parking space and an axis parallel to the line markings extending in a direction toward the parking space. The steering angle Φ is defined as the difference in direction between a longitudinal axis of the vehicle extending in a direction toward the parking space and an axis extending in the direction of a front wheel of the vehicle.

In one aspect, the method includes the step of repositioning the vehicle proximal to the parking space if both the outer distal ends of the pair of parallel line markings are not detected.

In another aspect, the method includes detecting an end boundary line marking intersecting the pair of parallel line markings and adjusting the steering angle Φ such that the degree of the entry angle γ is about zero degrees when the vehicle is immediately adjacent the end boundary line marking.

In another aspect, the method includes reversing the vehicle, by the controller, away from the end boundary line marking if the entry angle γ does not approach zero degrees as the vehicle is driven toward the end boundary line marking, adjusting the steering angle Φ, by the controller, such that the entry angle γ approaches zero as the vehicle is reversing, and re-approaching end boundary line marking while adjusting the steering angle Φ such that the degree of the entry angle γ approaches zero as the vehicle is driven toward the end boundary line marking.

In another aspect, the method includes generating a map of the detected parallel line markings delineating the parking space, localizing the vehicle in the map between the parallel line markings, determining the distances the vehicle is apart from each of the parallel line markings, and reversing the vehicle out of parking space if one of the distances is less than a predetermined distance.

In another aspect, the vehicle sensors include a first sensor mounted on the right side of the vehicle at a distance X from the rear fascia, and further includes the step of determining a distance X' along the immediate adjacent line marking from adjacent the first sensor to the distal end of the adjacent line marking, and determining the vehicle is within the parking space if the distance X' is equal to or greater than X.

In another aspect, the vehicle sensor further includes a second sensor mounted on the left side of the vehicle at a distance Y from the rear fascia, and further includes the step of determining a distance Y' along the immediate adjacent line marking from adjacent the second sensor to the distal end of the adjacent line marking, and determining the vehicle is within the parking space if the distance X' is equal to or greater than X and the distance Y' is equal to or greater than Y.

In another aspect, the method includes the steps of projecting a vector V rearward at a predetermined angle α from the first sensor, projecting a vector V' rearward at a predetermined angle α' from the second sensor, and confirming the vehicle is within the parking space if the vector V intersects one of the parallel line markings and the vector V' intersects the other of the parallel line markings. The vector V may include a predetermined length such that the vector V intersects one of the parallel line markings when the vehicle is completely within the parking space.

A method of parking a vehicle in a parking space delineated by two parallel lines is also provided. The method includes the steps of detecting the two parallel lines and a distal end of each of the two parallel lines; determining a distance between the two distal ends; comparing the distance between the two distal ends with a predetermined vehicle width; driving the vehicle in a direction toward the parking space between the two distal ends if the predetermined vehicle width across is less than the distance between the two distal ends; determining an entry angle γ as the vehicle is driven into the parking space; and adjusting the direction of the vehicle such that the entry angle γ approaches zero degrees as the vehicle is driven into the parking space. The entry angle γ is defined as the difference in direction between a longitudinal axis of the vehicle extending in a direction toward the parking space and the direction of the parallel lines

In one aspect, the method includes the steps of determining the distance the vehicle is apart from each of the parallel lines and reversing the direction of the vehicle if the vehicle is within a predetermined distance to one of the parallel lines.

In another aspect, the method includes the steps determining a distance X from a first reference point on the right side of the vehicle to the rear fascia; determining a distance Y from a second reference point on the left side of the vehicle to the rear fascia; determining a distance X' on the parallel line from adjacent the first reference point to the respective distal end; determining a distance Y' on the parallel line from adjacent the second reference point to the respective distal end; and determining the vehicle is within the parking space if the distance X' is equal to or greater than X and the distance Y' is equal to or greater than Y.

In another aspect, the method includes the steps detecting an end boundary line intersecting the two parallel lines; determining the distance the vehicle is from the end boundary line marking; and stopping the vehicle if the vehicle is at or less than a predetermined distance to the end boundary line marking.

In another aspect, the method includes the steps of projecting a vector V at a predetermined angle α from the first reference point; projecting a vector V' at a predetermined angle α' from the second reference point; and confirming the vehicle is within the parking space if the vector V intersects one of the parallel lines and vector V' intersects the other of the parallel lines.

A system for autonomous perpendicular parking of a vehicle is provided. The system includes a plurality of imaging sensors configured to detect line markings on the front, right side, and left side of the vehicle; a plurality of ranging sensors configured to detect the line markings on the front, right, and left side of the vehicle, and objects in a path of the vehicle; and a controller communicatively coupled to the plurality of imaging sensors and the plurality of ranging sensors. The controller is configured to initiate a parking routine if at least one of the imaging sensors detect a pair of parallel line markings having respective distal ends.

In one aspect, the controller is configured adjust the vehicle steering such that an entry angle γ of the vehicle approaches zero degrees as the vehicle is driven into the parking space, wherein the entry angle γ is defined as the difference in direction between a longitudinal axis of the vehicle and the direction of the parallel line markings.

In another aspect, the controller is further configured to generate a map of the detected parallel line markings delineating a parking space; locate the vehicle in the map; determine the distances the vehicle is apart from each of the parallel line markings; and reverse the vehicle out of the parking space if one of the distances is less than a predetermined distance.

In another aspect, the system further includes a sensor is mounted on a side of the vehicle at a predetermined distance X from the rear fascia of the vehicle. The sensor is configured to detect an exterior distal end of the immediately adjacent line marking. The controller is configured to determine a distance X' along the line marking from a point A immediately adjacent the sensor to the distal end of the line and determine the vehicle is within the parking space if the distance X' is equal to or greater than X.

In another aspect, the controller is further configured to project a vector V at a predetermined angle α from the first reference point; project a vector V' at a predetermined angle α' from the second reference point; and confirm the vehicle is within the parking space if the vector V intersects one of the parallel line markings and vector V' intersects the other of the parallel line markings.

In another aspect, the controller is further configured to detect an end boundary line marking intersecting the two parallel line markings; determine the distance the vehicle is from the end boundary line marking; and brake the vehicle if the vehicle is at or less than a predetermined distance to the end boundary line marking.

Further aspects, examples, and advantages will become apparent by reference to the following description and appended drawings wherein like reference numbers refer to the same or similar component, element, or feature.

### BRIEF DESCRIPTION OF THE DRAWINGS

The above and other aspects will become more apparent and more readily appreciated from the following description of exemplary embodiments, taken in conjunction with the accompanying drawings in which:
FIG. 1 is a step diagram of a system for the autonomous parking of a vehicle;
FIG. 2 is a top view illustration of an exemplary vehicle having the system of FIG. 1 navigating into a parking space;
FIG. 3 is a top view illustration of the exemplary vehicle of FIG. 2 entering the parking space;
FIG. 4 is a top view illustration of the exemplary vehicle of FIG. 2 positioned within the parking space; and
FIG. 5 is a flow diagram presenting a method for autonomous perpendicular parking of the vehicle of FIG. 2.

### DETAILED DESCRIPTION

The following description is merely exemplary in nature and is not intended to limit the present disclosure, applications, or uses.

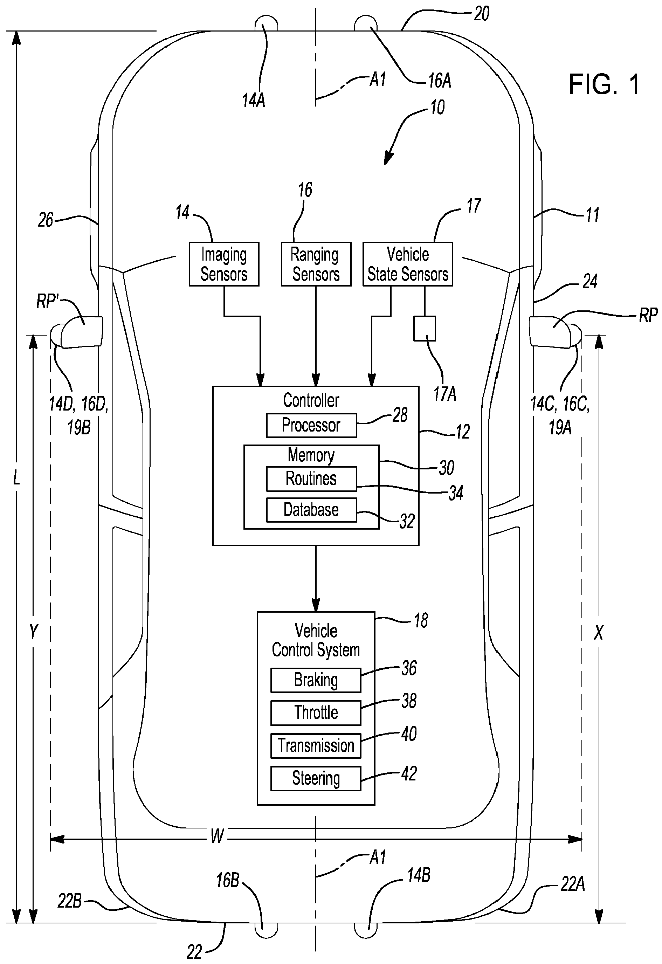

FIG. 1 shows a block diagram of an autonomous parking system 10 for a vehicle 11. The autonomous parking system 10 includes a controller 12 in communication with a plurality of imaging sensors 14, a plurality of ranging sensors 16, a plurality of vehicle state sensors 17, and a vehicle control system 18. The autonomous parking system 10 is operable to identify an available parking space, generate a parking lane map, calculate a proper path into the parking space, navigate the vehicle 11 through the calculated parking path into the parking space, and properly position the vehicle 11 within the parking space.

For illustrative purposes, a passenger type vehicle 11 is shown having the autonomous parking system 10. The vehicle 11 may be also that of a truck, sport utility vehicle, van, motor home, or any other type of vehicle without departing from the scope of the present disclosure. The vehicle 11 includes a front fascia 20, a rear fascia 22, a right side 24, and a left side 26. The vehicle 11 includes a vehicle length (L) extending along a vehicle central longitudinal axis A1 and a vehicle width (W). The vehicle 11 also includes a reference point RP on the right side 24 of the vehicle 11. The reference point RP may be that of the right side mirror and is located at a predetermined distance X from the right edge 22A of the rear fascia 22. Similarly, the vehicle 11 includes a reference point RP' on the left side 26 of the vehicle 11 that is located at a predetermined distance Y from the left edge 22B of the rear fascia 22. The reference points RP, RP' are used as part of a method to properly position the vehicle 11 within a perpendicular type parking space, as will be described in greater detail below.

The imaging sensors 14 may include electronic cameras configured to capture visual information in the visible light spectrum and/or in a non-visual (e.g. infrared) portion of the light spectrum in the field of view of the respective camera. More specifically, the electronic cameras are configured to capture light waves reflected from lane markings such as parking line markings. The imaging sensors 14 may include a front facing camera 14A, a rear facing camera 14B, a right facing camera 14C, and left facing camera 14D. Data input from the individual cameras 14A, 14B, 14C, 14D may be fused to provide a 360° field of view with respect to the vehicle 11.

The ranging sensors 16 may include any ranging technology, including radar, laser, sonic devices, etc., operable to detect objects proximal to the vehicle 11 and to determine the distances from the objects to the vehicle 11. The direction of the objects from the vehicle 11 may be determined based on the locations of the placement of the ranging sensors 16 on the vehicle 11. By way of example only, a front ranging sensors 16A is shown mounted on the front fascia 20, a rear ranging sensor 16B mounted on the rear fascia 22, a right ranging sensor 16C mounted on the right side 24, and a left ranging sensor 16D is mounted on the left side 26 of the vehicle 11.

A right sensor 19A configured to detect and to determine the distances of lane markings immediate to the right of the vehicle 11 is mounted on the reference point RP. Similarly, a left sensor 19B configured to detect and to determine the distances of lane markings immediate to the left side 26 of the vehicle 11 is mounted on the reference point RP'. The sensors 19A, 19B may be that of an imaging sensor 14, a ranging sensor 16, or a combination of imaging/ranging sensor. A Light Detection and Ranging (LiDAR) sensor 19 may be used in conjunction with or in lieu of the imaging sensors 14 and/or ranging sensors 16. The exemplary vehicle 11 is shown with a LiDAR sensor 19A, 19B mounted on the right side 24 and on the left side 26 of the vehicle 11.

The controller 12 includes a processor 28 and non-transitory computer readable memory 30. The processor 28 and memory 30 are shown as being within the same housing; however, it should be understood by those of ordinary skill in the art that the processor 28 and/or memory 30 may actually include multiple processors or memories that may or may not be stored within the same housing. For example, one or more processors may be a commercially available central processing unit (CPU) or an application-specific integrated circuit (ASIC) designed for a specific application. The controller 12 may employ analog and/or digital control circuity including ASIC for processing the input data from the imaging sensors 14 and ranging sensors 16. It should be appreciated that the ASIC processor may be built into the circuity of the each of the imaging sensors 14 and ranging sensors 16.

The non-transitory memory 30 stores a database 32 containing reference road markings as defined by the United States Department of Transportation for conveying messages to roadway users, including reference parking line markings for delineating a parking space 46. The database 32 also contains reference images of types of parking space 46 delineated by the parking line markings, such as angled parking, parallel parking, and perpendicular parking spaces. The database 32 may also contain reference images of objects that are commonly found in a parking lot or parking structure, such as cones, barriers, and pedestrians. The non-transitory memory 30 may store multiple routines 34 for the autonomous operation of the vehicle 11 that are implemented by the processor 28. One of the routines 34 includes a method 100 of autonomous perpendicular parking of the vehicle 11.

The exemplary vehicle 11 includes a plurality of vehicle state sensors 17 such as a speed sensor, steering angle sensor 17A, inertial measure unit (IMU), etc. communicatively coupled with the controller 12 to determine the state of the vehicle 11. The controller 12 takes the input data from the imaging sensors 14, ranging sensors 16, and vehicle state sensors 17 for communicating with the vehicle control system 18 for autonomous operation of the vehicle 11. The vehicle control system 18 includes any systems that implement the autonomous parking functions which include parking the vehicle 11. For example, the vehicle control system 18 may include a braking control system 36, throttle control system 38, transmission control system 40, steering control system 42, etc.

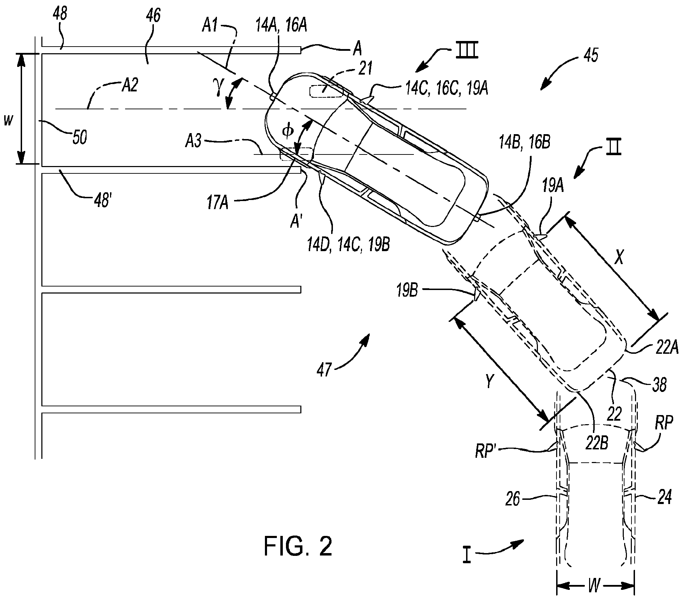

FIG. 2 shows the exemplary vehicle 11 equipped with the system 10 of FIG. 1 within a general parking lot 45 having a plurality of parking spaces 46. It should be appreciated that the parking lot 45 may have any configuration including that of a covered parking structure or open air parking area without departing from the scope of the present disclosure. The exemplary vehicle 11 is shown in three (3) progressing positions I, II, and III as the vehicle 11 maneuvers down an aisle 47 of the parking lot 45 toward an available perpendicular parking space 46. The available parking space 46 is delineated by a pair of parallel parking line markings 48, 48' and an end boundary line marking 50 intersecting the pair of parallel parking line markings 48, 48'. The line markings 48, 48' and end boundary line 50 are imprinted or painted onto the surface of the parking lot 45.

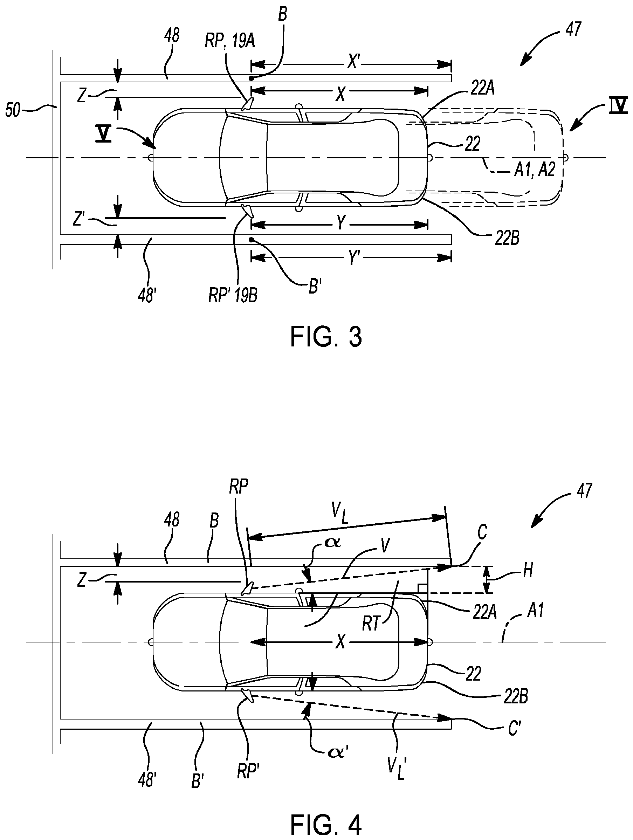

FIG. 3 shows the vehicle 11 entering into the parking space 46 as the processor 28 fuses the input data from the imaging sensors 14 and ranging sensors 16 to generates a parking lane map localizing the vehicle 11 within the parallel parking line markings 48, 48'. The exemplary vehicle 11 is shown in two (2) progressing positions IV and V as the vehicle 11 enters into the available parking space 46.

Fig. 4 shows the vehicle 11 parked within the parking space 46 undergoing a final check to confirm the vehicle 11 is properly positioned within the parking space 46. The vehicle 11 is properly positioned when the vehicle 11 is approximately centered within the pair of parallel parking lines 48, 48' and the rear fascia 22 of the vehicle 11 does not extend past the two end points A, A' into the aisle 47.

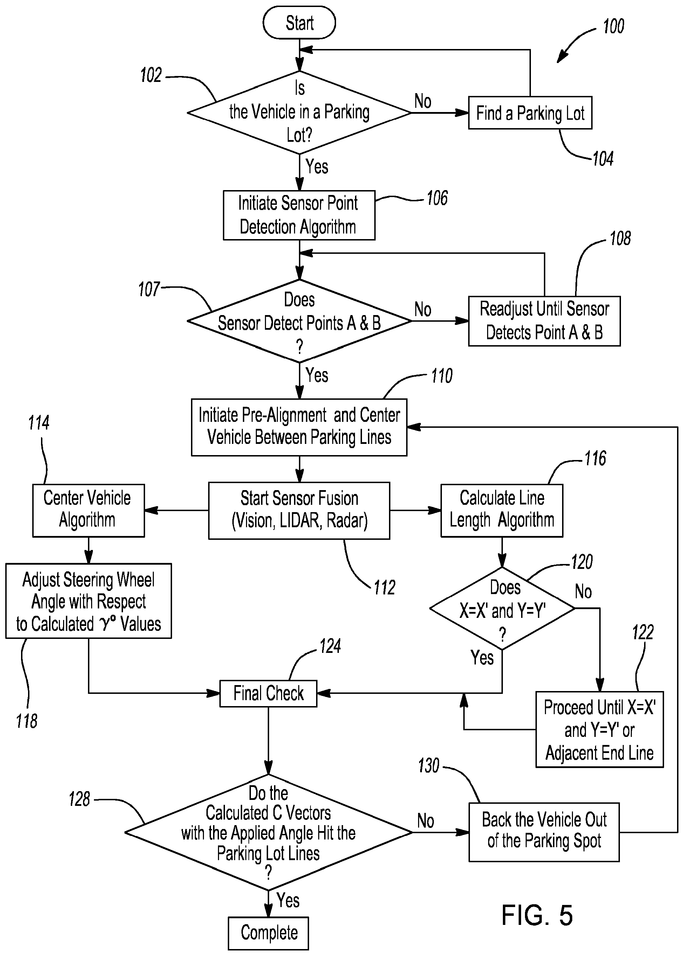

FIG. 5 shows a flow diagram for a method 100 of autonomously perpendicularly parking a vehicle 11. The method 100 begins at step 102, by determining whether the vehicle 11 is presently within the parking lot 45 having parking spaces delineated by parking line markings. If the vehicle 11 is not within the parking lot 45, at step 104, the operator of the vehicle 11 or the autonomous parking system 10 finds a parking lot 45 that has parking spaces delineated by parking line markings.

At step 106, if the vehicle 11 is determined to be within the parking lot 45 having parking spaces delineated by parking line markings, the vehicle 11 initiates a sensor point detection algorithm to find an available parking space 46 as the vehicle 11 maneuvers through position I as shown in FIG. 2. The sensor point detection algorithm includes the processor 28 analyzing the images captured by the imaging sensors 14 to detect the parallel parking line markings 48, 48' delineating the parking space 46, compare the parking line markings 48, 48' with reference parking line images in the database 32, and identifies the type of parking space 46 as being a perpendicular type parking space 46. The controller 12 then analyzes the data input from the imaging and/or ranging sensors 14, 16 directed toward the parking space 46 to confirm that the parking space 46 is not occupied and it is available. Once availability of the parking space 46 is confirmed, the vehicle 11 maneuvers proximal to the distal ends, point A and point A', of the parallel parking line markings 48, 48'.

At step 107, the vehicle 11 is approximately at position II as shown in FIG. 2. The processor 28 analyzes the images captured by the imaging sensors 14 to detect the outer distal ends, point A and point A', of the parallel parking line markings 48, 48'. If the outer distal ends, point A and point A', are not detected in the captured images, then at step 108, the vehicle 11 is repositioned until both point A and point A' are captured by the imaging sensors 14 and detected by the processor 28.

At step 110, the vehicle 11 is approximately at position III as shown in FIG. 2. The controller 12 initiates pre-alignment and centers the vehicle 11 between the parallel lines 48, 48'. The processor 28 analyzes the images to determine the parking space width (w) between point A and point A'. If the width of the parking space (w) is greater than the vehicle width (W) of the vehicle 11, the controller 12 then takes the input data from the imaging sensors 14 and ranging sensors 16 to identify the central axis A2 of the parking space 46 and calculates a proper path to navigate the vehicle 11 into the parking space 46. The central axis A2 is the axis that extends into the parking space 46 midway between points A and A' and parallel with the parallel parking line markings 48, 48'.

At step 112 the processor 28 fuses the data input from the imaging sensors 14 and ranging sensor 16 to generate a parking lane map of the parking space 46 as the vehicle 11 is maneuvering into the parking space 46. The parking space 46 is delineated by the two parallel lines 48, 48' and the end boundary line 50.

At step 114, the controller 12 initiates a center vehicle algorithm to center the vehicle 11 between the two parallel lines 48, 48'. Simultaneously, at step 116, the controller 12 initiates a calculate line length algorithm to determine when the vehicle has completely entered the parking space.

At step 118, the center vehicle algorithm includes the controller 12 instructing the vehicle control system 18 to apply a steering angle Φ, such that the entry angle γ approaches zero degrees as the vehicle 11 is driven into the parking space 46 while aligning the central axis A1 of the vehicle 11 with the central axis A2 of the parking space 46. The controller 12 communicates with the vehicle state sensors 17 and vehicle control system 18 to operate the vehicle brake control 36, throttle control 38, transmission control 40, and steering control 42 to autonomously navigate the vehicle 11 into the parking space 46 between the outer distal ends, point A and point A'. The vehicle state sensor 17 includes a steering angle sensor 17A that is configured to measure the steering angle of the front wheels 21 relative to the longitudinal axis A1 of the vehicle 11.

As the front fascia 20 of the vehicle 11 enters between point A and point A', the processor 28 analyzes the images captured by the imaging sensors 14 to determine an entry angle γ as the vehicle 11 is driven into the parking space 46 while aligning the central axis A1 of the vehicle 11 with the central axis A2 of the parking space 46. The entry angle γ is defined as the difference in direction between the central longitudinal axis A1 of the vehicle 11 and the central axis A2 of the parking space 46. The controller 12 then instructs the vehicle control system 18 to adjust the steering angle Φ, such that the entry angle γ approaches zero degrees as the vehicle 11 is driven into the parking space 46, while continuing to align the central longitudinal axis A1 of the vehicle 11 with the central longitudinal axis A2 of the parking space 46. The angle Φ is defined as the difference in direction between a longitudinal axis of the vehicle A1 extending in a direction toward the parking space 46 and an axis extending in the direction of front wheel of the vehicle A3. It is preferable that the steering angle Φ is adjusted such that the degree of the entry angle γ is about zero degrees when the vehicle 11 is completely within the parking space 46. The amount of adjustment of the steering angle Φ to achieve a 0-degree entry angle γ as the vehicle 11 is driven into the parking space 46 may be obtained from a predefined relationship or lookup table for the specific type of vehicle stored in the database 32.

If the entry angle γ does not approach zero degrees as the vehicle 11 is driven toward the end boundary line marking 50, the vehicle 11 is reversed while adjusting the steering angle Φ such that the entry angle γ approaches zero degrees as the vehicle 11 is reversing. Once the vehicle 11 is reversed out of the parking space 46, the vehicle 11 re-approaches the end boundary line marking 50 while adjusting the steering angle Φ such that the degree of the entry angle γ approaches zero as the vehicle 11 is driven toward the end boundary line marking while aligning the central longitudinal axis A1 of the vehicle 11 with the central longitudinal axis A2 of the parking space 46.

At step 120, referring now to FIG. 3, as the vehicle 11 is passing through position IV to position V, the calculate line length algorithm includes the processor 28 comparing the reference distance X to measured length X' on the parking line marking to the right side 24 of the vehicle 11 and reference length Y to measured length Y' on the parking line marking on the left side 26 of the vehicle 11. For the exemplary vehicle 11 shown, the LiDAR sensors 19A, 19B are configured to detect parking line markings 48, 48' to the right and left of the vehicle 11 and to determine the distances Z, Z' to the parking line markings 48, 48'. The right side LiDAR sensor 19A measures a distance X' along the parking line marking 48 from a point B on the line marking 48 immediately adjacent the LiDAR sensor 19A to the distal end point A. The processor 28 compares X' to X and determines the vehicle 11 to be within the parking space 46 if the measured distance X' is greater than reference distance X. Similarly, the vehicle 11 has a reference distance Y, which is measured from the left side LiDAR sensor 19B, or reference point RP', to the left rear edge 22B of rear fascia 22. The LiDAR sensor 19B is configured to measure a distance Y' along the parking line marking 48' from a point B' immediately adjacent the LiDAR sensor 19B to the distal end point A'. The processor 28 compares Y' to Y and determines the vehicle 11 to be within the parking space 46 if the measured distance Y' is greater than reference distance Y. Alternatively, the measured distances X' and Y' relative to the reference distances X and Y may be determined from the generated lane map.

At step 122, the controller 12 instructs the vehicle control system 18 to stop the vehicle 11 and place the transmission in park when one of the following first occurs: (i) X' is equal to or greater than X and Y' is equal to or greater than Y, or (ii) when the front of the vehicle 11 is immediate adjacent the end boundary line marking 50.

It should be appreciated that if the vehicle 11 is positioned between the two parking line markings 48, 48' and the front fascia 20 of the vehicle 11 is immediately adjacent the end boundary line marking 50, the rear fascia 22 of the vehicle 11 may still extend outside the parking space 46. For example, a parking space sized for a compact vehicle may not accommodate the entire length of a full size vehicle such as a mini-van. Therefore, at step 126, once it is determined that X is equal to X' and Y is equal to Y', or if when the front of the vehicle 11 is immediately adjacent the end boundary line marking 50, and the steering angle Φ and entry angle γ are approximately zero degrees, the controller 12 conducts a final check at step 124 to verify the vehicle 11 is completely within the parking space 46. Referring now to FIG. 5, a vector V is projected at a predetermined angle α from the right side 24 of the vehicle 11, and similarly a vector V' is projected at a predetermined angle α' from the left side 26 of the vehicle 11. The vehicle 11 is determined to be within the parking space 46 if the vector V intersects the parking line marking immediately to the right side 24 of the vehicle 11 and the vector V' intersects the parking line marking immediately to the left side 26 of the vehicle 11.

At step 128, the vector V has a predetermined length V_{L} and angle α is projected rearward from the reference point RP on the right side 24 of the vehicle 11. Similarly, a vector V' having a predetermined length V_{L} and angle α' is projected rearward from the reference point RP' on the left side 26 of the vehicle 11. The projections may be a virtual projection on the generated parking lane map, or may be an actual projection on the surface of the parking space 46. The vehicle 11 is determined to be within the parking space 46 if the vector V, having an angle α projected from a reference point RP on the right side 24 of the vehicle 11, intersects the parking line marking 48 and the vector V', having an angle α' projected from a reference point RP' on the left side 26 of the vehicle 11, intersects the parking line marking 48'.

The length V_{L} of the vector V that is required to intersect the adjacent parking line marking 48 on the right side 24, when the vehicle 11 is properly in position within the parking space 46, is calculated by using the Pythagorean Theorem. This is based on the premise that the longitudinal axis A1 of the vehicle 11 is parallel with the longitudinal axis A2 of the parking space 46, which is parallel with the parking line markings 48, 48'. For the purpose of determining the angle α, it is necessary to first assume that the vehicle 11 is completely within the parking space 46 by extending the parking line markings 48, 48' outward beyond the rear fascia 22 of the vehicle 11.

A right triangle (RT) is defined by the reference point RP, the right edge 22A of the rear fascia 22, and a point C on the parking line marking 48, or the extension of the parking line marking, immediately adjacent the right edge 22A of the rear fascia 22. The base (b) of the right triangle (RT) is the distance X between the right edge 22A of the rear fascia 22 to the reference point RP. The height (h) of the right triangle is the distance between point C on the parking line marking 48, or extension of the parking line marking 48, immediate adjacent the right rear edge 22A of the rear fascia 22. The height (h) of the right triangle (RT) is the same as the distance Z between the reference point RP and the point B on the parking line 48. The vector length V_{L} is the hypotenuse connecting the reference point RP to the parking line marking 48 at point C. By knowing the length of the base b (distance X) and height h (i.e. distance Z between reference point RP and point B) of the right triangle (RT), an angle α can be calculated to provide the proper length vector V_{L} that would intersect the parking line marking 48 when the vehicle 11 is properly in the parking space 46. Similarly, the angle α' is calculated based on the corresponding features on the left side 26 of the vehicle 11. If the vehicle 11, is perfectly centered, then V_{L} should equal V_{L}'. However, the vehicle need not be perfectly centered, but substantially centered such that the vehicle is between the parking line markings 48, 48' with at least 6 inches between the vehicle 11 and the respective parking line markings 48, 48'.

The vehicle 11 is confirmed to be within the parking space 46 if the vector V intersects the actual parking line marking 48, not the projection of the parking line marking 48, immediately to the right side 24 of the vehicle 11 and the vector V' intersects the actual parking line marking 48' immediately to the left side 26 of the vehicle 11.

At step 130, if both of the projected vectors V, V' do not intersect their respective adjacent parking line markings 48, 48', then the vehicle 11 is reversed out of the parking space 46 and the method 100 returns to step 110 or the parking routine is aborted. If both of the projected vectors V, V' intersect with their respective adjacent parking line markings 48, 48', then the vehicle 11 is properly parked.

The description of the invention is merely exemplary in nature and variations that do not depart from the gist of the invention are intended to be within the scope of the invention. Such variations are not to be regarded as a departure from the spirit and scope of the invention. While some examples and embodiments for carrying out the claimed invention have been described in detail, various alternative designs and embodiments exist for practicing the invention defined in the appended claims.

## Claims

1. A method (100) of autonomous perpendicular parking of a vehicle (11), comprising the steps of:
positioning the vehicle (11) proximal to a parking space (46) delineated by a pair of parallel line markings (48, 48'), wherein each of the parallel line markings (48, 48') includes an outer distal end (A, A');
detecting, by a vehicle sensor, the pair of parallel line markings (48, 48') and the outer distal end (A, A') of each of the parallel line markings (48, 48');
driving the vehicle (11), by a controller (12), into the parking space (46) between the outer distal end (A, A') of each of the parallel line markings (48, 48');
determining an entry angle γ as the vehicle (11) is driven into the parking space (46), wherein the entry angle γ is defined as the difference in direction between a longitudinal axis (A1) of the vehicle (11) extending in a direction toward the parking space (46) and an axis (A2) parallel to the line markings (48, 48') extending in a direction toward the parking space (46); and
applying a steering angle Φ, by the controller, such that the entry angle γ approaches zero degrees as the vehicle (11) is driven into the parking space (46), wherein the steering angle Φ is defined as the difference in direction between a longitudinal axis (A1) of the vehicle (11) extending in a direction toward the parking space (46) and an axis (A3) extending in the direction of a front wheel (21) of the vehicle (11).

2. The method (100) of claim 1, further comprising the step of repositioning the vehicle (11) proximal to the parking space (46) if both the outer distal ends (A, A') of the pair of parallel line markings (48, 48') are not detected.

3. The method (100) of claim 1 or 2, wherein each of the line markings (48, 48') includes an end boundary line marking (50) intersecting the pair of parallel line markings (48, 48'); and further comprising the steps of:
detecting the end boundary line marking (50); and
adjusting the steering angle Φ such that the degree of the entry angle γ is about zero degrees when the vehicle (11) is immediately adjacent the end boundary line marking (50).

4. The method (100) of claim 3, further include the steps of:
reversing the vehicle (11), by the controller (12), away from the end boundary line marking (50) if the entry angle γ does not approach zero degrees as the vehicle (11) is driven toward the end boundary line marking (50);
adjusting the steering angle Φ, by the controller (12), such that the entry angle γ approaches zero as the vehicle (11) is reversing; and
re-approaching end boundary line marking (50) while adjusting the steering angle Φ such that the degree of the entry angle γ approaches zero as the vehicle (11) is driven toward the end boundary line marking (50).

5. The method (100) of any one of the preceding claims, further comprising the steps of:
generating a map of the detected parallel line markings (48, 48') delineating the parking space (46);
localizing the vehicle (11) in the map between the parallel line markings (48, 48');
determining the distances the vehicle (11) is apart from each of the parallel line markings (48, 48'); and
reversing the vehicle (11) out of parking space (46) if one of the distances is less than a predetermined distance.

6. The method (100) of any one of the claims 3 to 5, wherein the vehicle sensors include a first sensor mounted on the right side (24) of the vehicle (11) at a distance X from the rear fascia (22), and further includes the step of determining a distance X' along the immediate adjacent line marking from adjacent the first sensor to the distal end of the adjacent line marking, and determining the vehicle (11) is within the parking space (46) if the distance X' is equal to or greater than X, and
wherein the vehicle sensor preferably further includes a second sensor mounted on the left side (26) of the vehicle (11) at a distance Y from the rear fascia (22), and further includes the step of determining a distance Y' along the immediate adjacent line marking from adjacent the second sensor to the distal end of the adjacent line marking, and determining the vehicle (11) is within the parking space (46) if the distance X' is equal to or greater than X and the distance Y' is equal to or greater than Y.

7. The method (100) of any one of the claims 4 to 6, further includes the steps of:
projecting a vector V rearward at a predetermined angle α from the first sensor;
projecting a vector V' rearward at a predetermined angle α' from the second sensor; and
confirming the vehicle (11) is within the parking space (46) if the vector V intersects one of the parallel line markings (48, 48') and the vector V' intersects the other of the parallel line markings (48, 48'), wherein the vector V preferably includes a predetermined length such that the vector V intersects one of the parallel line markings (48, 48') when the vehicle (11) is completely within the parking space (46).

8. A method of parking a vehicle (11) in a parking space (46) delineated by two parallel lines (48, 48'), comprising the steps of:
detecting the two parallel lines (48, 48') and a distal end (A, A') of each of the two parallel lines (48, 48');
determining a distance (w) between the two distal ends (A, A');
comparing the distance (w) between the two distal ends (A, A') with a predetermined vehicle width (W);
driving the vehicle (11) in a direction toward the parking space (46) between the two distal ends (A, A') if the predetermined vehicle width (W) across is less than the distance (w) between the two distal ends (A, A');
determining an entry angle γ as the vehicle (11) is driven into the parking space (46), wherein the entry angle γ is defined as the difference in direction between a longitudinal axis (A1) of the vehicle (11) extending in a direction toward the parking space (46) and the direction of the parallel lines (48, 48'); and
adjusting the direction of the vehicle (11) such that the entry angle γ approaches zero degrees as the vehicle (11) is driven into the parking space (46).

9. The method (100) of claim 8, further comprising the step of:
determining the distance the vehicle (11) is apart from each of the parallel lines (48, 48'); and
reversing the direction of the vehicle (11) if the vehicle (11) is within a predetermined distance to one of the parallel lines (48, 48').

10. The method (100) of claim 8 or 9, further comprising the steps of:
determining a distance X from a first reference point (RP) on the right side of the vehicle (11) to the rear fascia (22);
determining a distance Y from a second reference point (RP') on the left side of the vehicle (11) to the rear fascia (22);
determining a distance X' on the parallel line (48) from adjacent the first reference point (RP) to the respective distal end (A);
determining a distance Y' on the parallel line (48') from adjacent the second reference point (RP') to the respective distal end (A'); and
determining the vehicle (11) is within the parking space (46) if the distance X' is equal to or greater than X and the distance Y' is equal to or greater than Y.

11. The method of any one of the claim 8 to 10, further comprising the steps of:
detecting an end boundary line marking (50) intersecting the two parallel lines (48, 48');
determining the distance the vehicle (11) is from the end boundary line marking (50); and
stopping the vehicle (11) if the vehicle is at or less than a predetermined distance to the end boundary line marking (50).

12. The method of claim 10 or 11, further comprising the steps of:
projecting a vector V at a predetermined angle α from the first reference point (RP);
projecting a vector V' at a predetermined angle α' from the second reference point (RP'); and
confirming the vehicle (11) is within the parking space (46) if the vector V intersects one of the parallel lines (48) and vector V' intersects the other of the parallel lines (48').

13. A system (10) for autonomous perpendicular parking of a vehicle (11), comprising:
a plurality of imaging sensors (14) configured to detect line markings on the front, right side (24), and left side (26) of the vehicle (11);
a plurality of ranging sensors (16) configured to detect the line markings on the front, right side (24), and left side (26) of the vehicle (11), and objects in a path of the vehicle (11); and
a controller (12) communicatively coupled to the plurality of imaging sensors (14) and the plurality of ranging sensors (16);
wherein the controller (12) is configured to initiate a parking routine if at least one of the imaging sensors (14) detect a pair of parallel line markings (48, 48') having respective distal ends (A, A').

14. The system (10) of claim 13, wherein the controller (12) is configured to adjust the vehicle steering such that an entry angle γ of the vehicle (11) approaches zero degrees as the vehicle (11) is driven into the parking space (46), wherein the entry angle γ is defined as the difference in direction between a longitudinal axis (A1) of the vehicle (11) and the direction of the parallel line markings (48, 48').

15. The system (10) of claim 13 or 14, wherein the controller (12) is further configured to detect an end boundary line marking (50) intersecting the two parallel line markings; determine the distance the vehicle (11) is from the end boundary line marking (50); and brake the vehicle (11) if the vehicle (11) is at or less than a predetermined distance to the end boundary line marking (50).
